# FASCICULE DE BREVET EUROPEEN

(11) **EP 2 235 076 B1**
(45) Date de publication et mention de la délivrance du brevet: **15.08.2012**
(21) Numéro de dépôt: 08865945.3
(22) Date de dépôt: 23.12.2008
(51) Int. Cl.: C08F 220/00, C08J 7/18, B05D 3/00, B32B 27/00, B32B 15/00

(54) **FILM POLYESTER ENROULABLE COMPRENANT SUR AU MOINS L'UNE DE SES FACES, UN REVÊTEMENT RETICULE RESISTANT AUX RAYURES, PROCEDE D'OBTENTION DE CE FILM POLYESTER**
ROLLPOLYESTERFOLIE MIT KRATZFESTER VERNETZTER BESCHICHTUNG AUF ZUMINDEST EINER SEITE UND VERFAHREN ZUR HERSTELLUNG DIESER POLYESTERFOLIE
ROLL-UP POLYESTER FILM COMPRISING, ON AT LEAST ONE OF THE FACES THEREOF, A SCRATCH-RESISTANT CROSSLINKED COATING, METHOD FOR OBTAINING THIS POLYESTER FILM

(30) Priorité: 26.12.2007 FR 0760356
(43) Date de publication de la demande: 06.10.2010
(73) Titulaire: Toray Films Europe, 01700 Saint-Maurice-de-Beynost (FR)
(72) Inventeur: FALDYSTA, Julien, F-69100 VILLEURBANNE (FR); GAMBUT-GAREL, Lucile, F-69003 LYON (FR); JUILLARD, Isabelle, F-69290 SAINT GENIS LES OLLIERES (FR)
(74) Mandataire: Cabinet Plasseraud
(86) Numéro de dépôt international: PCT/EP2008/068228
(87) Numéro de publication internationale: WO 2009/083552

(56) Documents cités:
- EP-A- 0 920 985
- WO-A-2006/069047
- US-A- 5 415 942
- US-A1- 2004 013 892

## Description

### Domaine de l'invention

La présente invention a pour objet de nouveaux films polyester enroulables sur bobine et présentant un revêtement anti-rayures et éventuellement d'autres propriétés comme la résistance au vieillissement du fait des UV.

Le domaine de l'invention est celui des films polyesters, en particulier les films polyesters aromatiques tels que le polyéthylène téréphtalate PET (e.g. à orientation bi-axiale) ou le polyéthylène naphtalate (PEN) qui sont d'usage très répandu du fait de leurs excellentes propriétés bien connues de stabilité thermique, de stabilité dimensionnelle, de résistance chimique et d'énergie de surface relativement haute en tant que films pour feuilles métalliques stratifiées, films destinés à être collés sur des surfaces d'écran en verre et films de protection pour une grande variété d'éléments par exemple des films en (PET).

Les films en polyester, notamment en PET, sont largement utilisés notamment dans l'emballage et dans des applications industrielles (e.g. isolation électrique, composants électroniques et films de protection).

### Problème technique et art antérieur

La colamination de films polyester sur des substrats ou feuilles métalliques représente une application en développement. Les laminés film polyester/feuille métallique (acier) sont utiles notamment pour la protection d'appareils électroménagers, de portes, de panneaux décoratifs ou de tableaux blancs ou bien encore de panneaux métalliques intégrés dans des éléments de construction (toit, fenêtre) de bâtiments extérieurs ou dans des véhicules de transports trains, bateaux ou automobiles. Dans cette application, le film polyester est utile comme film de protection du métal contre les rayures ou les griffures. Ces propriétés anti-griffures ou anti-rayures correspondent à une dureté de surface (ou résistance à l'abrasion).

Pour obtenir ces propriétés, il a été proposé de modifier la structure du film polyester en lui-même et/ou de réaliser un film polyester et une ou plusieurs couches de polymère et/ou d'appliquer sur le film polyester, un revêtement dur sur au moins une de ses faces. Un tel revêtement dur améliore naturellement la résistance aux rayures ou à l'abrasion, mais peut également avoir une influence sur l'adhésion, la topologie de la surface, la perméabilité aux gaz, le caractère imprimable et l'opacité.
Le caractère anti-adhérent des films polyester est particulièrement recherché pour les applications extérieures dans lesquelles il est souhaitable que les films polyester aient des propriétés anti-graffitis. Or, la plupart des films polyesters pourvus d'un revêtement dur et connus jusqu'alors, parviennent à une amélioration de la résistance à l'abrasion sans atteindre un niveau d'anti-adhérence suffisant pour donner lieu à des propriétés anti-graffitis.
En outre, ces films polyesters connus revêtus d'une ou plusieurs couches dures sont également perfectibles au regard de tout ou partie des caractéristiques techniques suivantes :
- résistance à l'abrasion et/ou aux rayures, et/ou aux griffures (dureté),
- adhésion du revêtement dur sur le film substrat en polyester, par exemple en PET,
- transparence et propriétés antireflets,
- acquisition de propriétés anti-UV,
- possibilité de réaliser le revêtement dur dans le cadre du procédé de fabrication du film polyester avant et/ou après que le film polyester ait été orienté, mis en place et refroidi.

A titre d'illustration de la technologie d'application d'un revêtement dur sur un film polyester, en particulier un film PET, on citera ci-après quelques brevets.

US-B-4 310 600 décrit un film polyester à orientation bi-axiale, préalablement soumis à un traitement corona, puis revêtu en premier lieu d'une couche de latex thermodurcissable et en deuxième lieu d'une couche silicone obtenue par réticulation sous UV.

US-B-5 415 942 décrit un film polyester résistant à l'abrasion revêtu sur l'une de ses faces, d'un film adhésif et sur l'autre de ses faces, d'un revêtement primaire comprenant un polymère acrylique réticulable sur lequel est appliquée une couche silicone résistant à l'abrasion. Le revêtement primaire polyacrylique comprend par exemple 63% de méthylméthacrylate, 32% d'éthylacrylate, 3% d'acide méthacrylique et 2% de 2-hydroxyéthylacrylate, l'agent de réticulation étant du type mélamine-formaldéhyde. Le revêtement silicone résistant à l'abrasion comprend 10 à 70% de silice, jusqu'à 20% d'un époxysilane polymérisé et de 30 à 90% en poids d'un silanol polymérisé porteur d'un groupements fonctionnels vinylphénylglycidoxypropyle ou méthacryloxypropyle.

EP-B-1 418 197 divulgue un film de polyester à orientation bi-axiale comprenant un film de polyester aromatique sur lequel est enduit une couche de revêtement formée du mélange de résine de polyester, de résine acrylique et de cire. La résine polyester est obtenue par polycondensation à haute température sous pression réduite, à partir d'un acide du type acide téréphtalique, isophtalique, phtalique partiellement sulfoné, etc et d'un composant polyol du type éthylène-glycol, par exemple le 1,4-butane-diol-diéthylèneglycol, etc. La résine acrylique est un copolymère acrylique comprenant 50% molaire de méthylméthacrylate, 40% molaire d'éthylacrylate, 5% molaire de N-méthylolacrylamide et 5% molaire de 2-hydroxyéthylméthacrylate et obtenu par polymérisation à l'aide d'initiateurs de polymérisation (trois heures à 60-70°C). La cire est, par exemple, une cire de carnauba ou une paraffine. Cette couche peut également contenir des particules inertes de silice.

WO-A-03/072643 décrit un film polyester orienté bi-axialement imprimable et résistant à l'abrasion, ledit film étant revêtu d'une couche de mélamine réticulée contenant des particules colloïdales, par exemple de silice. Il s'agit de résines mélamine-formaldéhyde réticulant à l'aide d'un catalyseur à base d'acide phosphorique et contenant éventuellement un silane.

WO-A-2006/069047 décrit un film polyester sur lequel est appliqué un revêtement anti-rayures obtenu à l'aide d'un système de réticulation comprenant un peroxyde et un réticulant à base de mélamine. La composition de revêtement dur réticulable thermiquement selon le WO-A-2006/069047 contient un liant oligomère uréthane acrylate aliphatique hexafonctionnel, un diluant monomère du type 1,6-hexanedioldiacrylate, un initiateur thermique de peroxyde du type 1,1-di(tertbutylperoxy)-3,3,5-triméthylcyclohexane, un réticulant mélamine de type hexaméthoxyméthyl-mélamine, un silane du type 3-glycidoxypropyltriméthoxysilane et un promoteur d'adhésion constitué par un organosilane substitué de type HF86 et/ou par un mélange d'ester de silane de type PC850.

Ce type de revêtement est soit trop compliqué à réaliser avec plusieurs couches de produits comme c'est le cas avec le brevet US-B-4 310 600 soit il ne conduit pas à des duretés suffisantes par rapport à la protection de façade d'électroménager ou en extérieur.

### Objectifs de l'invention

Dans ce contexte, l'un des objectifs essentiels de la présente invention est de fournir un film polyester enroulable notamment sur bobine, comprenant sur au moins l'une de ses faces un revêtement dur réticulé parfaitement résistant aux rayures c'est à dire à l'abrasion, ce film étant en outre économique, anti-adhérent (propriétés anti-graffitis), cohésif c'est à dire doté d'un revêtement anti-rayures parfaitement solidaire du substrat polyester, et éventuellement transparent et/ou antireflets et/ou anti-UV.

Un autre objectif essentiel de l'invention est de fournir un film polyester enroulable, comprenant sur au moins l'une de ses faces, un revêtement dur réticulé anti-rayures, qui soit aisément industrialisable, en particulier qui puisse être intégré dans le cadre du procédé de fabrication classique du film polyester avant et/ou après que le film polyester ait été orienté, mis en place et refroidi.

Un autre objectif essentiel de l'invention est de fournir un film polyester enroulable, comprenant sur au moins l'une de ses faces, un revêtement dur réticulé anti-rayures, qui soit une alternative avantageuse aux films polyesters connus pourvus d'un revêtement dur, et en particulier qui ne comprenne ni des réticulants à base de mélamine, ni des liants à base d'uréthanne. ni des cires.

Un autre objectif essentiel de la présente invention est de fournir un film polyester, de préférence enroulable, comprenant sur au moins l'une de ses faces, un revêtement dur réticulé résistant aux rayures, un tel film étant particulièrement adapté pour réaliser des laminés avec des feuilles de métal, par exemple en acier.

Un autre objectif essentiel de la présente invention est de fournir un procédé d'obtention d'un film polyester enroulable, comprenant sur au moins l'une de ses faces, un revêtement dur réticulé, résistant aux rayures, et satisfaisant aux objectifs susvisés.

Un autre objectif de l'invention est de fournir un procédé d'obtention d'un film polyester, de préférence enroulable, pourvu d'un revêtement dur réticulé, résistant aux rayures, un tel procédé étant simple à mettre en oeuvre et faisant appel à des technologies de réticulation par activation actinique, de préférence sous UV.

### Brève description de l'invention

Ces objectifs, parmi d'autres, sont atteints par la présente invention qui concerne, dans un premier aspect, un film polyester, de préférence enroulable, comprenant sur au moins l'une de ses faces un revêtement réticulé sous irradiation actinique, résistant aux rayures et à base de:
**i.** 20 à 99 % en poids d'au moins un ester et/ou un amide d'acide (méth)acrylique à groupement protique substitué, de préférence au moins un ester d'acide (méth)acrylique et d'au moins un alcool polyhydrique aliphatique à groupement protique substitué, et, plus préférentiellement encore, au moins un ester d'acide (méth)acrylique et d'au moins un alcool polyhydrique aliphatique à groupement protique substitué choisi dans le groupe comprenant : 2-hydroxyéthylacrylate et méthacrylate, 3-hydroxypropyl acrylate et méthacrylate, 2-acryloyloxyméthyl-2-hydroxyméthylpropane, 2-méthacryloyloxyméthyl-2-hydroxyméthyl-propane, pentaérythritol mono, bis- et triacrylate, pentaérythritol mono-, bis-, et triméthacrylate, dipentaérythritol di-, tri-, tétra-, et penta-acrylate et méthacrylate;
**ii.** 20 à 99 % en poids de résine(s) acryliques(s);
**iii**. 1 à 40 % en poids d'un polyalkylènediacrylate, de préférence un hexaméthylène diacrylate;
**iv.** 0 à 50% en poids d'au moins un dérivé de la famille des benzophénones ;
**v.** 0 à 2 % en poids d'au moins un photoinitiateur sélectionné parmi les produits suivants: produits de la famille des benzophénones différents des dérivés (iv) de la famille des benzophénones pris seuls ou en mélange entre eux, des alpha-hydroxycétoncs pris seuls ou en mélange entre eux, produits de la famille des phénylglyoxales pris seuls ou en mélange entre eux, produits formés par un mélange des composés bis-acyl phosphine et alpha-hydroxycétone et leurs mélanges..

Ce film de polyester, de préférence enroulable, comprenant sur au moins l'une de ses faces, un revêtement dur réticulé, résistant à l'abrasion, possède de bonnes propriétés de dureté, donc de résistance aux rayures, de bonnes propriétés de cohésion entre le film et le revêtement, voire des caractéristiques optionnelles d'imprimabilité et/ou de transparence et/ou antireflets et/ou anti-UV. Il est économique et simple à obtenir.

Dans un deuxième aspect, l'invention satisfait aux objectifs susvisés en proposant un procédé d'obtention du film tel que défini ci-dessus, ce procédé étant donc caractérisé en ce qu'il consiste essentiellement :
**a.** à mettre en oeuvre une composition de revêtement comprenant les constituants (i) à (iii), éventuellement (iv) et/ou (v), tels que définis ci-dessus;
**b.** éventuellement à diluer par ajout de solvant la composition de revêtement pour atteindre un extrait sec inférieur ou égal à 50%, de préférence inférieur ou égal à 35%, et, plus préférentiellement encore, inférieur ou égal à 20%;
**c.** éventuellement à traiter préalablement la (ou les) face(s) du film polyester à revêtir, de préférence par irradiation UV ou par traitement corona ou plasma ou encore par enduction préalable de formulations à base d'acrylique, de polyester et/ou de polyuréthane;
**d.** à enduire la (ou les) face(s) du film polyester à revêtir avec ladite composition de revêtement ;
**e.** puis à sécher et irradier par voie actinique, de préférence sous UV, ladite composition de revêtement appliquée par enduction pour obtenir un revêtement réticulé.

Ce procédé satisfait aux exigences industrielles de vitesse et de facilité de mise en oeuvre.

Dans un troisième aspect, l'invention concerne un colaminé polyester/feuille métallique comprenant au moins un film polyester selon l'invention et au moins une feuille métallique.

### Description détaillée de l'invention

Au sens de l'invention, le terme "enroulable" qui correspond à un mode préféré de réalisation, signifie que le film polyester peut être aisément enroulé, e.g. autour d'une bobine, et déroulé, cette opération de déroulement ne nécessitant pas une force importante, c'est-à-dire qu'il n'y a pas de défaut d'aspect de la bobine comme des cannelures, des défauts vis ou des points de collage dus au "blocking" c'est-à-dire un blocage dû au défaut de glissement entre les feuilles du film. Ce caractère "enroulable" est assimilable à une bonne "machinabilité" qui est difficile à quantifier. On trouve dans Macromolecular Symposia, 1999, 148, 311-319*,* une quantification possible de la "machinabilité" par mesure de la couche d'air dans une bobine de film par interférométrie. Cette mesure est cependant délicate et il est bien connu que la rugosité du film contribue en partie à l'obtention d'une couche d'air adaptée à une bonne "machinabilité". Ainsi, on considère qu'il est préférable que la rugosité moyenne (Ra) soit, par exemple, supérieure ou égale à 5 nm mesurée d'après la norme DIN 4768, pour avoir un film doté d'une bonne "machinabilité" et donc pour avoir un film "enroulable".

Le film polyester selon l'invention est revêtu d'une pellicule de revêtement réticulé dur, résistant à l'abrasion, qui perturbe peu ou pas les propriétés intrinsèques du film polyester.

Pour ce faire, l'invention repose au moins en partie sur la sélection nouvelle et non évidente d'une composition de revêtement dur réticulé, à base des composants (i) à (iii), éventuellement (iv) et/ou (v).

De préférence, cette composition de revêtement dur réticulé est exempte de réticulant de type mélamine.

De préférence, cette composition de revêtement dur réticulé est exempte de cire.

De préférence, cette composition de revêtement dur réticulé est exempte de liant uréthanne.

### Film polyester

Le film polyester ou substrat sur lequel est appliqué le revêtement réticulé dur est de préférence un polyester aromatique, plus préférentiellement encore un polyester aromatique essentiellement linéaire, obtenu à partir d'un acide dibasique aromatique ou d'un ester dérivé dudit acide, et d'un diol ou d'un ester dérivé de ce diol.

Avantageusement, le film polyester mis en oeuvre est à orientation bi-axiale.

Le polyester constituant le film de base peut être choisi parmi les polyesters auxquels on fait appel habituellement pour l'obtention de films semi-cristallins bi-orientés. Il s'agit de polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs diols (glycols) aliphatiques.
Comme exemples d'acides aromatiques, on peut citer les acides phtalique, téréphtalique, isophtalique, naphtalènedicarboxylique-2,5, naphtalène-dicarboxylique-2,6. Ces acides peuvent être associés à une quantité mineure d'un ou plusieurs acides dicarboxyliques aliphatiques ou cycloaliphatiques, tels que les acides adipique, azélaïque, tétra- ou hexahydroteréphtalique.
Comme exemples non limitatifs de diols aliphatiques, on peut citer l'éthylèneglycol, le propanediol-1,3, le butanediol-1,4. Ces diols peuvent être associés à une quantité mineure d'un ou plusieurs diols aliphatiques plus condensés en carbone (néopentylglycol par exemple) ou cycloaliphatiques (cyclohexanediméthanol).
Préférentiellement, les polyesters filmogènes cristallisables sont des polytéréphtalates ou des polynaphtalènedicarboxylates d'alkylénediol et, en particulier, le polytéréphtalate d'éthylèneglycol (PET) ou de butanediol-1,4 ou des copolyesters comportant au moins 80% en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 et 0,75 dl/g.

Les films de polyester bi-orientés sont, par exemple:
➢ soit constitués de polyéthylène téréphtalate ;
➢ soit constitués de mélanges ou non de copolyesters polyéthylène téréphtalate contenant des unités cyclohexyl diméthylol à la place des unités éthylène (voir brevet US-A-4 041 206 ou EP-A-0408042);
➢ soit composés de mélanges ou non de copolyesters polyéthylène téréphtalate avec une partie de polyester présentant des unités isophtalate (voir brevet EP-B-0515096);
➢ soit constitués de plusieurs couches de polyesters de natures chimiques différentes, comme décrit précédemment, obtenu par coextrusion.

Des exemples spécifiques de polyesters aromatiques sont notamment le polyéthylène téréphtalate, le polyéthylène isophtalate, le polybutylène téréphtalate, le poly-(diméthyl-1,4-cyclohexylènetéréphtalate) et le polyéthylène-2,6-naphtalènedicarboxylate. Le polyester aromatique peut être un copolymère de ces polymères ou un mélange de ces polymères avec une petite quantité d'autres résines. Parmi ces polyesters, le polyéthylène téréphtalate (PET) et le polyéthylène-2,6-naphtalènedicarboxylate sont particulièrement préférés car ils offrent un bon équilibre entre les propriétés physiques, les propriétés mécaniques et les propriétés optiques.

Le film polyester pourvu d'un revêtement dur réticulé selon l'invention peut être aisément laminé par collage thermique et/ou à l'aide d'adhésif à un très grand nombre d'autres substrats, dont notamment les feuilles métalliques, par exemple en acier, les plaques ou les feuilles de verre ou d'autres polymères analogues au verre.

Les polyesters, notamment les polyesters aromatiques, peuvent contenir (au moins en surface) une charge appropriée aux besoins comme par exemple pour éviter de coller sur lui-même.
Ces charges particulaires sont avantageusement incluses dans le polyester afin de modifier ses propriétés de surface.
Comme exemples de charge qui sont connues comme lubrifiants pour film polyester, on peut citer le carbonate de calcium, l'oxyde de calcium, l'oxyde d'aluminium, le kaolin, la silice, l'oxyde de zinc, le noir de carbone, le carbure de silicium, l'oxyde d'étain, les particules de résine acrylique réticulée, les particules de résine polystyrène réticulée, des particules de résine mélanine réticulée, des particules de résine silicone réticulée ou analogue. De préférence, on utilise des charges de type silice et/ou carbonate.
Les particules de charge sus-décrites peuvent avoir un diamètre moyen compris entre 0,05 et 10 microns et sont présentes de préférence dans une quantité comprise entre 0 et 20000 parties par million en poids par rapport à la masse totale du polyester (e.g. aromatique) et plus particulièrement entre 0,5 et 6 microns et sont présentes de préférence dans une quantité comprise entre 200 et 1500 parties par million en poids par rapport à la masse totale du polyester (e.g. aromatique).
Dès lors qu'un film à haute transparence est souhaité, il est préférable d'éviter l'incorporation massive de charge.
Par ailleurs, si besoin est, le film polyester peut comprendre en outre au moins un autre additif, de préférence choisi dans le groupe suivant : colorant, agent antistatique, antioxydant, agent lubrifiant organique, additif anti-UV, catalyseur ou tout autre additif analogue.

Suivant une variante avantageuse de l'invention, le film polyester comprend au moins un additif anti-UV incorporé de préférence dans le film ou substrat polyester. Cet additif anti-UV peut être choisi parmi plusieurs groupes de produits connus tels que ceux décrits dans l'ouvrage "Additives for plastics on book, John Murphy, 2nd Edition 2001, Elsevier- Advanced Technology" et plus spécifiquement pour les films PET comme ceux décrits dans le brevet US-B-6 593 406.

A titre d'exemple d'additifs anti-UV, on peut citer :
- la famille des anti-oxydants ou absorbeurs comme les benzophénones, les benzotriazoles, les benzoxazinones et les triazines;
- la famille des "*Hindered amine light stabilizers*" (HALS), seule ou en combinaison avec des antioxydants.

Le film polyester comprendra de préférence au moins un additif anti-UV, et plus préférentiellement encore un anti-UV du type triazine.

Ces additifs anti-UV servent à contrer les effets des UV et de l'oxygène sur les films polyesters.

Le film de polyester aromatique peut être obtenu par extrusion/fusion qui produit un film de polyester aromatique, lequel est ensuite refroidi et solidifié sur un tambour de mise en forme pour obtenir un film non étiré. Le film non étiré est ensuite étiré à une température comprise entre la température de transition vitreuse Tg et une température égale à Tg + 60°C en direction longitudinale, une ou plusieurs fois (par exemple de 3 à 6 fois), puis le film est étiré à une température comprise entre Tg et Tg + 60°C en direction transversale selon un ratio d'étirage de 3 à 5 fois. Le film étiré bi-axialement est ensuite traité thermiquement à une température comprise entre 180 et 250°C pendant 1 à 60 secondes par exemple et ensuite à une température inférieure afin de stabiliser le film.

Le film polyester a préférablement une épaisseur comprise entre 4 et 350 microns. La limite supérieure et la limite inférieure de l'épaisseur de film (e^{f}) sont plus préférablement encore de 8 microns et 50 microns respectivement. Quand l'épaisseur de film est dans cet intervalle, le film présente une résistance mécanique favorable, notamment en vue de l'application d'un revêtement dur réticulé.

Le film polyester peut être de structure simple ou coextrudé AB, ABA ou encore ABC voire de structure plus complexe en multicouches (les symboles A, B et C correspondant à des couches de nature et/ou de composition différente).

### Revêtement réticulé anti-rayures

### Epaisseur du revêtement

Suivant une caractéristique préférée de l'invention, le revêtement a une épaisseur (e^{r}) inférieure ou égale à 10 µm, de préférence comprise entre 1 et 7 µm.

### Composition du revêtement

### -i-Ester et/ou amide d'acide (méth)acrylique à groupements protiques substitués

Ces composés représentent 20 à 99% en poids par rapport au poids total de la composition de revêtement.

Ces composés, et en particulier les esters d'alcool polyhydrique, ainsi que les méthodes de fabrication desdits composés sont bien connus de l'homme de l'art. Par exemple, un procédé de production d'un mono, di ou tri acrylate ester hydroxy substitué consiste à faire réagir l'acide acrylique en excès avec un composé di, tri ou tétra hydroxylé. Par conséquent, l'acide acrylique peut par exemple être mis en réaction avec le pentaérythritol pour produire un mélange d'esters di, tri et tétra acrylique, mélange à partir duquel il est possible d'extraire de manière sélective et connue en soi, les composés esters les plus adaptés à l'invention, comme par exemple le triacrylate de pentaérythritol.

### -ii- Résine acrylique

Cette résine acrylique représente 20 à 99% en poids par rapport au poids total de la composition de revêtement et est préférablement choisie parmi celles solubles dans l'eau ou dans un milieu aqueux contenant de petites quantités de solvant organique.

La résine acrylique peut être obtenue par polymérisation, de préférence par copolymérisation de silice, de silane acrylate comme agent de couplage et d'un ou plusieurs des monomères acryliques suivants (liste non limitative) :
- alkylacrylate et alkylméthacrylate dans lesquels le groupe alkyl est un groupe méthyle, éthyle, n-propyl, isopropyl, n-butyl, isobutyl, t-butyl, 2-éthylhexyl, cyclohexyl ou analogues ;
- des monomères hydroxylés tels que le 2-hydroxyéthylacrylate, le 2-hydroxyéthylméthacrylate, le 2-hydroxypropylacrylate et le 2-hydroxypropylméthacrylate ;
- les monomères époxydés tels que les glycidyl-acrylates;
- le glycidylméthacrylate et l'allylglycidyl éther ;
- les monomères comprenant un groupe carboxylique ou un sel carboxylate tel que l'acide acrylique et l'acide méthacrylique, l'acide itaconique, l'acide succinique, l'acide maléique, l'acide fumarique, l'acide crotonique, l'acide styrène sulfonique et les sels de ceux-ci (tels que le sel de sodium, le sel de potassium, le sel d'ammonium et les sels d'amine tertiaire) ;
- les monomères contenant des groupements amide tels que l'acrylamide, le méthacrylamide, le N-alkylacrylamide, le N-alkylméthacrylamide, le N, N-dialkylacrylamide, N, N-dialkylméthacrylamide (dans lequel le groupe alkyl est un groupe méthyl, un groupe éthyl, un groupe propyl, un groupe isopropyl, un groupe N-butyl, un groupe isobutyl, un groupe t-butyl, un goupe 2-éthylhexyl, un groupe cyclohexyl ou analogues), N-alcoxyacrylamide, N-alcoxyméthacrylamide, N, N-dialkoxyacrylamide, N, N-dialkoxyméthacrylamide (dans lequel le groupe alcoxy est un groupe méthoxy, éthoxy, butoxy, isobutoxy ou analogues) ; acryloyl, morpholine, N-méthylolacrylamide, N-méthylolméthacrylamide, N-phénylacrylamide et N-phénylméthacrylamide ;
- des monomères contenant des groupements oxazolines tels que le 2-vinyle-2-oxazoline, 2-vinyl-4-méthyl-2-oxazoline, 2-vinyl-5-méthyl-2-oxazoline, 2-isopropényl-2-oxalonine, 2-isopropényl-4-méthyl-2-oxazoline et 2-isopropényl-5-méthyl-2-oxazoline ;
- et les monomères comprenant une chaîne polyoxyalkylène résultant de l'addition d'un polyoxyalkylène à un groupement carboxylique d'un acide acrylique ou d'un acide méthacrylique.

Comme autres composés copolymérisables, on peut citer les anhydrides, les monomères d'anhydrides d'acides tels que l'anhydride maléique et l'anhydride itaconique et les monomères tels que l'isocyanate de vinyle, l'isocyanate d'allyle, le styrène, l'alpha-méthylstyrène, le vinyle méthyléther, le vinyléthyléther, le vinyltrialcoxysilane, le monoester d'acides alkyles maléiques, le monoester d'acide alkyl maléique, le monoester d'acide alkyl fumarique, le monoester d'acide alkylitaconique, l'acrylonitrile, le méthacrylonitrile, le chlorure de vinyl, l'éthylène, le propylène, le chlorure de vinylidène, l'acétate de vinyle et le butadiène peuvent être utilisés.

De préférence, la résine acrylique ou méthacrylique est composée d'un monomère du type acrylate ou méthacrylate de méthyle, d'éthyle ou de butyle. D'autres monomères vinyles peuvent être copolymérisés avec les esters d'acides acryliques ou d'acides méthacryliques. Il peut s'agir par exemple de composés vinyliques aromatiques et de composés vinyliques porteurs de groupes cyano.

### -iii- Polyalkylène diacrylate

Le poylalkylène diacrylate représente 1 à 40% en poids par rapport au poids total de la composition de revêtement.

L'hexaméthylène diacrylate est un exemple préféré de ce composé iii polyalkylène diacrylate. Comme autre exemple du composant iii, on peut citer entre autres le butylène diacrylate, l'octyl diacrylate.

### -iv- Dérivés de la famille des benzophénones.

Les dérivés de la famille des benzophénones, tels que le résorsinol sont présents dans la composition de revêtement à raison de 0 à 50% en poids par rapport au poids total de la composition de revêtement.

De préférence, les dérivés de la famille des benzophénones sont des dérivés du résorcinol sur lequel est greffé au moins un groupement alkoxysilyle par l'intermédiaire d'un motif d'espacement (rotule), par exemple un motif alkylène. Ces dérivés du résorcinol peuvent être obtenus par greffage d'au moins une fonction alkoxysilyle sur le noyau benzène du résorcinol par l'intermédiaire d'un précurseur porteur d'une fonction réactive acrylique ou alcényle. Les trois autres carbones substitués du noyau benzène du résorcinol peuvent être substitués par des groupements aromatiques, par exemple des groupements benzoyles afin de donner lieu à des coupures de Norrish lors de l'activation actinique.

Parmi les dérivés du résorcinol, on préfèrera le 4,6-dihydroxy-5-[3-(triéthoxy-silyl)propyl]-1,3-phénylène]bis[phénylméthanone].

### -v- Photoinitiateur

Au moins un photoinitiateur est présent dans la composition de revêtement à raison de 0 à 2% en poids par rapport au poids total de ladite composition en revêtement.

Dans un mode préféré de réalisation de l'invention, la composition comprend entre 0,01 et 2% en poids de photoinitiatcur et plus préférentiellement une quantité de l'ordre de 1 % en poids.

Le photoinitiateur est sélectionné parmi les produits suivants: produits de la famille des benzophénones différents des dérivés iv de la famille des benzophénones tels que décrits ci-dessus pris à eux seuls ou en mélange entre eux, produits de la famille des alpha-hydroxycétones pris à eux seuls ou en mélange entre eux, produits de la famille des phénylglyoxales pris à eux seuls ou en mélange entre eux, produits formés par un mélange des composés bis-acyl phosphine et alpha-hydroxycétone et leurs mélanges.

Les photoinitiateurs de la famille des alpha-hydroxycétones correspondent aux produits commerciaux IRGACURE® 184 et DAROCUR® 1173.

Les photoinitiateurs de la famille des phényls glyoxales correspondent aux produits commerciaux IRGACURE® 754.

Un mélange de composés bis acide phosphine et alpha-hydroxycétone est commercialisé sous la dénomination IRGACURE® 2022.

Il est à noter que ces dérivés (v) peuvent être avantageusement (mais non limitativement) utilisés comme photoinitiateurs, en complément ou en remplacement des dérivés de la famille des benzophénones (iv).

Le revêtement réticulé du film polyester selon l'invention est de préférence obtenu par réticulation sous irradiation actinique. Les photoinitiateurs susmentionnés correspondent à une irradiation actinique sous UV.

Il existe d'autres types d'activation par irradiation actinique qui peuvent être substitués ou combinés au rayonnement UV, comme par exemple le rayonnement électromagnétique dans le proche infrarouge, dans le visible ou dans les rayons X. Le rayonnement particulaire tel que le bombardement électronique est un autre type d'activation par irradiation actinique. L'activation de la réticulation du revêtement par irradiation actinique peut être éventuellement combinée à une activation thermique.

Le revêtement dur réticulé du film polyester selon l'invention peut contenir d'autres additifs comme par exemple des charges, des additifs anti-UV soit pour absorber les UV soit pour éviter le vieillissement du film. Ces charges et ces additifs anti-UV peuvent être par exemple choisis parmi ceux mentionnés ci-dessus, en tant que constituants possibles du substrat polyester.

### Procédé d'obtention du film

Selon son troisième aspect, l'invention concerne un procédé d'obtention notamment du film tel que défini ci-dessus. Ce procédé comprend essentiellement les étapes a, b, c, d et e décrites ci-après.

### Etape a :

La composition de revêtement de i) à iii) et éventuellement (iv) et/ou (v) conduisant au revêtement dur réticulé comprend par exemple:
i) triacrylate de pentaérythritol
ii) résine acrylique issue du greffage d'un silane acrylate sur une silice
iii) hexaméthylènediacrylate
iv) 4,6-dihydroxy-5-[3-(triéthoxysilyl)propyl]-1,3-phénylène]bis[phénylméthanone] pouvant être greffé sur la silice.
Ces composés sont par exemple en solution dans des solvants alcooliques tels que le 1-méthoxy-2-propanol seul ou en mélange avec le 2-méthoxy-1-propanol.

Les produits correspondants sont par exemple ceux commercialisés par la société MOMENTIVE PERFORMANCE MATERIALS.

### Etape b :

Conformément à l'invention, il est avantageux de diluer la composition de revêtement pour obtenir un extrait sec inférieur ou égal à 50%, de préférence inférieur ou égal à 35% en poids, et plus préférentiellement inférieur ou égal à 20%.

Cet extrait sec judicieusement sélectionné permet d'obtenir des couches minces de revêtement sur le substrat film polyester pour atteindre plus aisément l'épaisseur réduite souhaitée pour le revêtement réticulé.

### Etape c :

Cette étape consiste en un traitement visant à améliorer l'adhérence, selon lequel on soumet la ou les face(s) du film à revêtir du revêtement dur, à une irradiation UV, à un traitement corona ou à un traitement plasma ou selon lequel on enduit au préalable de formulations à base d'acrylique, de polyester et/ou de polyuréthane.

De tels traitements physiques sont réalisés de manière connue en soi par l'homme de l'art. A titre illustratif, on peut se référer par exemple au document dans Food Science and Nutrition, 1999, 39(5), pages 457-477.

### Etape d :

L'application de la composition liquide destinée à former le revêtement réticulé sur le film polyester, est réalisée à l'aide de toute méthode appropriée et connue en soi comme par exemple l'enduction à la barre de Meyer, l'enduction par rouleau lisse ou gravé, l'enduction en flexo, l'enduction en offset, l'enduction rideau entre autres.

De préférence, cette étape d'enduction est réalisée après les opérations d'étirage bi-axial du film polyester, par exemple PET.

Selon une variante, cette enduction peut être réalisée entre le premier et le second étirage.

Idéalement, la composition liquide d'enduction a une viscosité comprise entre 10 et 5000 mPa.s dans le cas des enductions par rouleau hélio par exemple comme décrit par les hommes de l'art (voir présentation de G. L. Booth, 15th annual IGC European Coating System Conferences, 1990, Amsterdam).

### Etape e : Séchage et irradiation actinique

Le séchage de la composition liquide de réticulation enduite sur le film polyester est réalisé de préférence au moyen d'air chaud (par exemple 50 à 100°C) projeté sur la composition liquide enduite sur le film polyester pendant quelques minutes. L'irradiation actinique est effectuée de manière connue en soi et de préférence à l'aide de lampes UV, en faisant en sorte que l'énergie délivrée soit comprise entre 0,1 et 2 joules/cm² pour une irradiance de 0,1 à 3 watts par cm² de composition réticulable enduite, de préférence entre 0,1 et 1 watt par cm² de composition réticulable enduite.

Par ailleurs, la vitesse du film (en m/minute) est un critère important. Pour optimiser la production industrielle, un équilibre doit être trouvé entre l'énergie fournie, l'irradiance et la vitesse du film.

Pour caractériser les propriétés du film polyester à revêtement dur réticulé selon l'invention, on mesure la dureté et la cohésion selon des méthodes d'évaluation usuelles.

Pour plus de détails sur l'obtention de films polyesters à revêtement dur réticulé, on peut se reporter par exemple à la demande de brevet européen EP-A-0 604 075.

Suivant une caractéristique préférée de l'invention, le film polyester est associé avec au moins une couche supplémentaire, de préférence au moins une couche de scellage et/ou une couche d'enduit imprimable et/ou une couche d'adhésif. Le film polyester peut être de structure simple ou coextrudé AB, ABA ou encore ABC, voire de structure plus complexe comme des multicouches.

Selon une autre modalité avantageuse de l'invention, le film tel que défini ci-dessus est obtenu par traitement préalable soit physique (de préférence UV, corona ou plasma) de la (ou des) face(s) du film destinée(s) à recevoir le revêtement ou soit chimique par enduction de formulations à base d'acrylique, de polyester et/ou de polyuréthane.
Ce traitement préalable vise à favoriser l'adhésion du revêtement réticulé sur le film polyester.

Le film polyester revêtu d'une couche dure selon l'invention est particulièrement bien adapté pour être laminé avec des substrats tels que des feuilles métalliques, par exemple en acier, voire des feuilles ou des films en plastique, ou bien encore des plaques de verre ou analogues.

Le film polyester selon l'invention colaminé avec une feuille métallique, par exemple en acier, offre ainsi une protection à la feuille d'acier, ce qui la rend peu ou pas sensible aux griffures et aux rayures, ceci est particulièrement appréciable dans des applications intérieures comme la protection d'appareils électroménagers, de portes, de panneaux décoratifs ou encore de tableaux blancs ou dans des applications en plein air pour protéger des panneaux métalliques faisant partie de construction (toit, fenêtre) ou présents dans les véhicules de transports comme les trains, les bateaux ou l'automobile.

Ainsi, l'invention concerne également dans un troisième aspect, un colaminé polyester/feuille métallique (par exemple en acier) comprenant au moins un film polyester tel que défini ci-dessus et au moins une feuille métallique (par exemple en acier).

L'invention sera mieux comprise et ses avantages ressortiront bien des exemples qui suivent.

### Exemples

Plusieurs types de films ont été enduits par un revêtement dur "hard coat" commercial UVHC 7000, UVHC 3000 ou UVHC 8600 sans solvant, tous produits par la société MOMENTIVE.
La composition de l'UVHC 7000 et de l'UVHC 3000 est donnée dans le tableau 1 ci-après. La différence entre les deux produits réside dans l'utilisation d'anti-UV dans UVHC 3000 pour plus protéger le film se trouvant en dessous du revêtement "hard coat". Pour l'UVHC 8600, il s'agit d'une formulation sans solvant 1-méthoxy-2-propanol et sans anti-UV.

**Tableau 1**

| | **Concentration (%)** |
|---|---|
| 1-methoxy-2-propanol | 50-100 |
| 2-méthoxy-1-propanol | 0-0.5 |
| Triacrylate de pentaérythritol | 10-20 |
| Résine acrylique | 10-20 |
| Hexaméthylène diacrylate | 1-10 |
| Derivés du resorcinol : 4,6-dihydroxy-5-[3-(triéthoxysilyl)propyl]-1,3-phénylène]bis[phénylméthanone] | 0-10 |
| 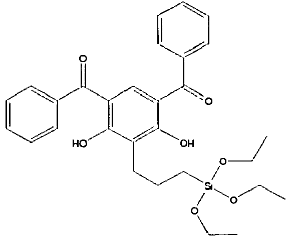 | |
| Additifs anti-UV | 0-10 |

Les photoinitiateurs donnés en exemple sont commercialisés notamment par la société Ciba. Il s'agit des produits IRGACURE® 754, IRGACURE® 184, IRGACURE® 2022.

Film A = un film de 36 µm comportant une seule couche de PET avec des charges de silice telles que le film atteigne un Haze suivant la norme ASTM D 1003 de 1,04%, et une rugosité définie par la DIN 4768 de Ra de 7,7 nm.

Film B = un film de 15 µm à 2 couches, l'une de PET avec charges de silice sur laquelle on fera l'enduction et l'autre correspondant à un mélange de PET, de copolyester avec des groupements diméthylcyclohéxyle et éthylène et des charges de silice, qui assure le scellage sur métal par exemple ou autre surface. Ce film se définit par un haze suivant la norme ASTM D 1003 de 3,7%, de rugosité définie par la norme DIN 4768 de Ra de 44,3 nm.

Film C = un film de 20 µm à 2 couches, l'une de PET avec charges de silice additionnées d'anti-UV de type triazine (TINUVIN® 1577 de Ciba) sur laquelle on fera l'enduction et l'autre couche correspondant à un mélange de PET, de copolyester avec des unités diméthylcyclohexyl, avec additif de type HALS et des charges de silice qui assurent le scellage sur métal par exemple ou autre surface. Les constituants du film permettent d'obtenir un haze suivant la norme ASTM D 1003 de 4, 1 %, une rugosité définie par la DIN 4768 de Ra de 17,6 nm et avec une transmission de 13% à 380 nm (contre 83% de transmission à 380 nm pour un PET sans anti-UV).

Film D = un film de 36 µm comportant une seule couche de PET avec des charges de silice et additionné d'anti-UV de type triazine (TINUVIN® 1577 de Ciba). Les constituants du film permettent d'obtenir un haze suivant la norme ASTM D 1003 de 1,4%, une rugosité définie par la DIN 4768 de Ra de 10,0 nm et avec une transmission de 43% à 380 nm (contre 83% pour un PET sans anti-UV).

Les mesures d'irradiance et d'énergie sont faites avec un UV Power Puck® EIT.
Le test d'adhésion est fait suivant la norme EN ISO 2409. L'adhésif utilisé est de type TESA 4651 (largeur 25 mm, force 10 N).
Des tests de rayures sont réalisés par un test Taber (ASTM D 1044 : "resistance of transparent plastic materials to surface abrasion") avec un modèle de type Abraser, chargé avec des poids de 500 g de type CS10F et un nombre de cycles de rotation de 100 et non de 500 comme le veut la norme. Des mesures de Haze avant et après test Taber sont réalisées pour évaluer l'aspect visuel des échantillons suivant la norme ASTM D 1003 avec un appareil de type Gardner. Les évaluations des tests seront commentées suivant les critères :
en adhésion
   ⊚ entre 0 très bon et 2, ○ entre 3 et 4, × correspondant à 5
résistance à la rayure
   ⊚ pour un delta de Haze avant et après test Taber inférieur ou égal à 4%, ○ supérieur à 4% et inférieur ou égal à 9%, × supérieur à 9%

### Exemples 1-3 :

La formulation UVHC 3000 est diluée ou non selon l'épaisseur de revêtement visée par ajout de solvant du type 1-méthoxy-2-propanol. Un film B est traité préalablement par irradiation UV ou non, puis enduit par utilisation d'une barre Meyer sur machine semi automatique puis séchée à 60°C et irradiée sous UV avec des lampes à mercure et gallium. On obtient une couche d'une certaine épaisseur pour une énergie et une irradiance mesurée. Le test au scotch indique le niveau d'adhésion puis des essais de résistance à la rayure sont effectués.

**Tableau 2**

| **Exemples** | **Prétraitement UV** | **Extrait sec (%)** | **énergie (J/cm²)** | **irradiance (W /cm²)** | **Epaisseur du revêtement (µm)** | **Ra (nm)** |
|---|---|---|---|---|---|---|
| Exemple 1 | oui | 16 | 1,5 | 0,4 | 1,7 | 166 |
| Exemple 2 | non | 45 | 1,2 | 0,4 | 7 | Non mesurable |
| Exemple 3 | oui | 32 | 1,2 | 0,6 | 4 | 14 |

On obtient les résultats suivants :

**Tableau 3**

| **Exemples** | **Haze du film** | **Adhésion** | **Résistance à la rayure** |
|---|---|---|---|
| Film nu | 3,2% | | × |
| Exemple 1 | 3,1% | ⊚ | ⊚ |
| Exemple 2 | 4,6% | × | ○ |
| Exemple 3 | 5,1% | ○ | ○ |

### Exemples 4-6 :

La formulation du revêtement « hard coat » est diluée par ajout de solvant du type 1-méthoxy-2-propanol. Sur un petit pilote de laboratoire permettant le déroulement d'une bobine de film, un film B non traité Corona est enduit grâce à un rouleau hélio d'une couche de 2 µm de la formulation de revêtement « hard coat » diluée à la vitesse de 0,5 m/min puis séché sous air chaud pendant 5 minutes à 70°C maximum. Un échantillon de cette bobine est irradié sous lampe UV de Fusion sans contrôle de l'air. La dureté 5 H correspond à notre cible de dureté recherchée.

**Tableau 4**

| Exemples | Type de formulation | Extrait sec (%) | Lampe UV utilisé | énergie (J/cm²) | irradiance (W /cm²) | Epaisseur du revêtement (µm) | Dureté crayon |
|---|---|---|---|---|---|---|---|
| Exemple 4 | UVHC 7000 | 22 | Type H | 0,4 | 0,5 | 2 | 5 H |
| Exemple 5 | UVHC 3000 | 32 | Type H | 1,2 | 1,2 | 2 | 5 H |
| Exemple 6 | UVHC 3000 | 32 | Type D | 1,7 | 2,7 | 2 | 5 H |

### Exemples 7-10 :

Un screening de photoinitiateurs est fait sur une plaque en verre pour une épaisseur de 2 µm et en suivant la dureté qui doit atteindre 5H suivant l'énergie nécessaire avec une lampe de type H.

**Tableau 5**

| | Revêtement « Hard coat » testé non dilué | Photoinitiateur testé | Quantité ajoutée par rapport au revêtement « hard coat » sec | Résultats trouvés en énergie UV (J/cm²) pour avoir 5H |
|---|---|---|---|---|
| Contre-exemple 7 | UVHC 7000 | aucun | - | > 2 |
| Exemple 8 | UVHC 7000 | IRGACURE® 754 | 1% | 1 |
| Exemple 9 | UVHC 7000 | IRGACURE® 184 | 1% | 0,50 |
| Exemple 10 | UVHC 7000 | IRGACURE® 2022 | 1% | 0,25 |

### Exemples 11-14 :

Du photoinitiateur IRGACURE® 2022 est ajouté à la formulation UVHC 7000 ou 3000 à raison de 1% par rapport à la matière sèche puis la formulation est diluée par ajout de solvant du type 1-méthoxy-2-propanol. Sur un petit pilote de laboratoire permettant le déroulement d'une bobine de film, un film B traité Corona est enduit grâce à un rouleau hélio d'une couche de 2 µm de la formulation UVHC à une vitesse donnée dans le tableau 6 puis séchée sous air chaud pendant 5 minutes à 70°C maximum. Un échantillon de cette bobine est irradié sous lampe de type H de Fusion UV sans contrôle de l'air. On obtient des résultats en termes de dureté crayon.

**Tableau 6**

| Exemples | Revêtement « Hard coat » | Extrait sec (%) | Photoinitiateur | Vitesse film (m/min) | énergie (J/cm²) | irradiance (W/cm²) | Dureté crayon |
|---|---|---|---|---|---|---|---|
| 11 | UVHC 7000 | 22 | 1% IRGACURE® 2022 | 0,5 | 0,66 | 0,11 | 6H |
| 12 | UVHC7000 | 22 | - | 0,5 | 1,54 | 0,11 | 5 H |
| 13 | UVHC3000 | 32 | - | 0,5 | 1,70 | 0,13 | 5H |
| 14 | UVHC7000 | 22 | 1% IRGACURE® 2022 | 1 | 0,26 | 0,10 | 6H |

Les exemples 11 et 14 donnent des résultats très satisfaisants car la quantité d'énergie nécessaire est faible pour produire un film à une vitesse idéale en production industrielle, l'ajout du photoinitiateur permettant en outre une bonne réticulation avec une dureté très satisfaisante.
La dureté crayon a été validée par rapport au test Taber et on retrouve bien une résistance à la rayure très bonne (⊚) pour les exemples 11 et 14.

### Exemples 15-19:

La formulation UVHC 7000 est diluée pour passer de 30 à 22% d'extrait sec par ajout de solvant du type 1-méthoxy-2-propanol. Sur un pilote permettant le déroulement d'une bobine de film, un film B traité Corona est enduit grâce à un rouleau hélio d'une couche de 2 µm de la formulation UVHC 7000 diluée à la vitesse donnée dans le tableau 7 puis séché sous air chaud sur 2 m à 70°C maximum. La réticulation est ensuite faite en ligne sous irradiation de 2 bulbes H de 240 W/cm² réglés à différents % et sans contrôle de l'air. On obtient une dureté de 5H pour une énergie de 0,26 J/cm².

**Tableau 7**

| Exemples | Extrait sec (%) | Photoinitiateur IRGACURE® 2022 | Prétraitement du film | Vitesse film (m/min) | irradiance % de la lampe | Dureté crayon |
|---|---|---|---|---|---|---|
| 15 | 22 | - | corona | 10 | 35 | 5H |
| 16 | 22 | - | corona | 30 | 80 | 5H |
| 17 | 22 | 1% | corona | 30 | 35 | 5H |
| 18 | 32 | 1% | corona | 30 | 80 | 6H Delta Haze après test Taber = 1% |
| 19 | 22 | 1% | corona | 90 | 80 | 5H |

### Exemples 20-22 :

La formulation UVHC 3000 est diluée par ajout de solvant du type 1-methoxy-2-propanol. Sur un petit pilote de laboratoire permettant le déroulement d'une bobine de film, un film B non traité Corona est enduit grâce à un rouleau hélio d'une couche de 2 µm de la formulation UVHC 3000 diluée à la vitesse de 0,5 m/min puis séché sous air chaud pendant 5 minutes à 70°C maximum. Un échantillon de cette bobine est irradié sous lampe de type H de plus forte puissance de Fusion UV (240 W/cm²) sous atmosphère contrôlée. On mesure une dureté et une énergie du film enduit.

**Tableau 8**

| Exemples | Revêtement « Hard coat » | Extrait sec (%) | Contrôle de l'air | énergie (J/cm²) | Dureté crayon |
|---|---|---|---|---|---|
| 20 | UVHC 3000 | 32 | air | 1,7 | 5H |
| 21 | UVHC 3000 | 32 | 5000 ppm O₂ | 0,25 | 5H |
| 22 | UVHC 3000 | 32 | 1000 ppm O₂ | 0,2 | 6H |

### Exemples 23-24

Du photoinitiateur IRGACURE® 2022 est ajouté à la formulation UVHC 7000 ou 3000 à raison de 1% par rapport à la matière sèche puis la formulation est diluée par ajout de solvant du type 1-méthoxy-2-propanol. Sur un petit pilote de laboratoire permettant le déroulement d'une bobine de film, un film de différent type traité Corona est enduit grâce à un rouleau hélio d'une couche de 2 µm de la formulation UVHC à 0,5 m/min puis séchée sous air chaud pendant 5 minutes à 70°C maximum. Un échantillon de cette bobine est irradié sous lampe de type H de Fusion UV sans contrôle de l'air. On obtient des résultats en termes de dureté crayon.

**Tableau 9**

| Exemples | Type de film | Revêtement « Hard coat » | Extrait sec (%) | Photoinitiateur | énergie (J/cm²) | irradiance (W /cm²) | Dureté crayon |
|---|---|---|---|---|---|---|---|
| 23 | A | UVHC 7000 | 22 | 1% IRGACURE® 2022 | 0,66 | 0,11 | 6H |
| 24 | C | UVHC 7000 | 22 | 1% IRGACURE® 2022 | 0,66 | 0,11 | 6H |

### Exemples 25-27

Du photoinitiateur IRGACURE® 2022 est ajouté à la formulation UVHC 8600 à raison de 1%. Sur un pilote, un film de différents types traité Corona est enduit grâce à un rouleau hélio d'une couche de 3 µm de la formulation UVHC à 30 m/min puis séchée sous air pendant 5 minutes à 40°C maximum. Un échantillon de cette bobine est irradié sous 2 lampes de 240 W/cm² et à 90% de l'énergie de 5J/cm² sans contrôle de l'air. On obtient des résultats en termes de delta de Haze après test Taber.

**Tableau 10**

| Exemples | Type de film PET | Grammage de l'enduit (g/m²) | Delta Haze en % après test Taber |
|---|---|---|---|
| 25 | A | 3,0 | 7 |
| 26 | B | 2,3 | 9 |
| 27 | D | 2,2 | 7 |

## Revendications

1. Film polyester, de préférence enroulable, comprenant sur au moins l'une de ses faces un revêtement réticulé sous irradiation actinique, résistant aux rayures et à base de:
**i.** 20 à 99 % en poids d'au moins un ester et/ou un amide d'acide (méth)acrylique à groupement protique substitué, de préférence au moins un ester d'acide (méth)acrylique et d'au moins un alcool polyhydrique aliphatique à groupement protique substitué, et, plus préférentiellement encore, au moins un ester d'acide (méth)acrylique et d'au moins un alcool polyhydrique aliphatique à groupement protique substitué choisi dans le groupe comprenant : 2-hydroxyéthylacrylate et méthacrylate, 3-hydroxypropyl acrylate et méthacrylate, 2-acryloyloxyméthyl-2-hydroxyméthylpropane, 2-méthacryloyloxyméthyl-2-hydroxyméthyl-propane, pentaérythritol mono, bis- et triacrylate, pentaérythritol mono-, bis-, et triméthacrylate, dipentaérythritol di-, tri-, tétra-, et penta-acrylate et méthacrylate;
**ii.** 20 à 99 % en poids de résine(s) acryliques(s) ;
**iii.** 1 à 40% en poids d'un polyalkylènediacrylate, de préférence un hexaméthylène diacrylate ;
**iv.** 0 à 50% en poids d'au moins un dérivé de la famille des benzophénones ;
**v.** 0,01 à 2% en poids d'au moins un photoinitiateur sélectionné parmi les produits suivants: produits de la famille des benzophénones différents des dérivés (iv) de la famille des benzophénones pris seuls ou en mélange entre eux, des alpha-hydroxycétones pris seuls ou en mélange entre eux, produits de la famille des phénylglyoxales pris seuls ou en mélange entre eux, produits formés par un mélange des composés bis-acyl phosphine et alpha-hydroxycétone et leurs mélanges.

2. Film selon la revendication 1, **caractérisé en ce qu'**il comprend entre 0,01 et 2% en poids de photoinitiateur, de préférence de l'ordre de 1% en poids par rapport au poids total de revêtement.

3. Film selon la revendication 1 ou 2, **caractérisé par** une épaisseur (e^{f}) comprise entre 4 et 350 µm, de préférence entre 8 et 50 µm.

4. Film selon l'une des revendications 1 à 3, **caractérisé en ce que** le revêtement a une épaisseur (e^{r}) inférieure ou égale à 10 µm, de préférence comprise entre 1 et 7 µm.

5. Film selon l'une quelconque des revendications 1 à 4, **caractérisé en ce que** le revêtement est obtenu par réticulation sous UV.

6. Film selon l'une quelconque des revendications 1 à 5, **caractérisé en ce qu'**il est obtenu par traitement préalable soit physique de la (ou des) face(s) du film destinée(s) à recevoir le revêtement ou soit chimique par enduction préalable de formulations à base d'acrylique, de polyester et/ou de polyuréthane.

7. Film selon l'une quelconque des revendications 1 à 6, **caractérisé en ce qu'**il contient au moins en surface des charges.

8. Film selon l'une quelconque des revendications 1 à 7, **caractérisé en ce qu'**il est associé avec au moins une couche supplémentaire, de préférence au moins une couche de thermoscellant et/ou une couche imprimable et/ou une couche d'adhésif.

9. Film selon l'une des revendication 1 à 8, **caractérisé en ce qu'**il comprend en outre au moins un autre additif, de préférence choisi dans le groupe suivant : colorant, agent antistatique, antioxydant, agent lubrifiant organique, additif anti-UV, catalyseur.

10. Film selon la revendication 9, **caractérisé en ce que** l'additif est au moins un additif anti-UV, de préférence du type triazine.

11. Procédé d'obtention du film tel que défini dans l'une quelconque des revendications 1 à 10, **caractérisé en ce qu'**il consiste essentiellement :
a. à mettre en oeuvre une composition de revêtement comprenant les constituants (i) à (iii) et (v), éventuellement (iv), tels que définis dans la revendication 1;
b. éventuellement à diluer par ajout de solvant la composition de revêtement pour atteindre un extrait sec inférieur ou égal à 50%, de préférence inférieur ou égal à 35%, et, plus préférentiellement encore, inférieur ou égal à 20%;
c. éventuellement à traiter préalablement la (ou les) face(s) du film polyester à revêtir, de préférence par irradiation UV ou par traitement corona ou plasma, ou par enduction préalable de formulations à base d'acrylique, de polyester et/ou de polyuréthane;
d. à enduire la (ou les) face(s) du film polyester à revêtir avec ladite composition de revêtement ;
e. puis à sécher et irradier par voie actinique, de préférence sous UV, ladite composition de revêtement appliquée par enduction pour obtenir un revêtement réticulé.

12. Colaminé polyester/feuille métallique (acier) **caractérisé en ce qu'**il comprend:
■ au moins un film polyester selon au moins l'une des revendications 1 à 10 ou un film polyester tel qu'obtenu par le procédé selon la revendication 11;
■ et au moins une feuille métallique.

## Claims

1. Polyester film, preferably of the roll-up type, comprising on at least one of its faces a coating that is cross-linked under actinic irradiation, scratch-resistant and based on:
**i.** 20 to 99 wt.% of at least one ester and/or amide of (meth)acrylic acid with a substituted protic group, preferably at least one ester of (meth)acrylic acid and of at least one aliphatic polyhydric alcohol with a substituted protic group, and, even more preferably, at least one ester of (meth)acrylic acid and of at least one aliphatic polyhydric alcohol with a substituted protic group selected from the group comprising: 2-hydroxyethyl acrylate and methacrylate, 3-hydroxypropyl acrylate and methacrylate, 2-acryloyloxymethyl-2-hydroxymethyl propane, 2-methacryloyloxymethyl-2-hydroxymethyl propane, pentaerythritol mono, bis- and triacrylate, pentaerythritol mono-, bis-, and trimethacrylate, dipentaerythritol di-, tri-, tetra-, and penta-acrylate and methacrylate;
**ii.** 20 to 99 wt.% of acrylic resin(s);
**iii**. 1 to 40 wt.% of a polyalkylene diacrylate, preferably a hexamethylene diacrylate;
**iv.** 0 to 50 wt.% of at least one derivative of the benzophenone family;
**v.** 0.01 to 2 wt.% of at least one photoinitiator selected from the following products: products of the benzophenone family different from the derivatives iv of the benzophenone family used alone or mixed together, alpha-hydroxyketones used alone or mixed together, products of the family of the phenyl glyoxals used alone or mixed together, products formed by mixing bis-acyl phosphine and alpha-hydroxyketone compounds and mixtures thereof.

2. Film according to claim 1, **characterized in that** it comprises between 0.01 and 2 wt.% of photoinitiator, preferably of the order of 1 wt.% relative to the total weight of coating.

3. Film according to claim 1 or 2, **characterized by** a thickness (e^{f}) between 4 and 350 µm, preferably between 8 and 50 µm.

4. Film according to one of claims 1 to 3, **characterized in that** the coating has a thickness (e^{r}) less than or equal to 10 µm, preferably between 1 and 7 µm.

5. Film according to any one of claims 1 to 4, **characterized in that** the coating is obtained by cross-linking under UV.

6. Film according to any one of claims 1 to 5, **characterized in that** it is obtained by prior treatment, either physical of the face or faces of the film intended to receive the coating or chemical by coating beforehand with formulations based on acrylic, polyester and/or polyurethane.

7. Film according to any one of claims 1 to 6, **characterized in that** it contains fillers at least on the surface.

8. Film according to any one of claims 1 to 7, **characterized in that** it is combined with at least one supplementary layer, preferably at least one layer of thermosealant and/or a printable layer and/or a layer of adhesive.

9. Film according to one of claims 1 to 8, **characterized in that** it further comprises at least one other additive, preferably selected from the following group: dye, antistatic agent, antioxidant, organic lubricant, anti-UV additive, catalyst.

10. Film according to claim 9, **characterized in that** the additive is at least one anti-UV additive, preferably of the triazine type.

11. Method for obtaining the film as defined in any one of claims 1 to 10, **characterized in that** it consists essentially of:
a. employing a coating composition comprising the constituents (i) to (iii) and (v), optionally (iv), as defined in claim 1;
b. optionally diluting the coating composition by adding solvent to achieve a dry extract less than or equal to 50%, preferably less than or equal to 35%, and, even more preferably, less than or equal to 20%;
c. optionally pretreating the face(s) of the polyester film to be coated, preferably by UV irradiation or by corona or plasma treatment, or by coating beforehand with formulations based on acrylic, polyester and/or polyurethane;
d. coating the face(s) of the polyester film to be coated with said coating composition;
e. then drying and irradiating by actinic route, preferably under UV, of said coating composition applied by coating to obtain a cross-linked coating.

12. Polyester/metal (steel) sheet colaminate, **characterized in that** it comprises:
■ at least one polyester film according to at least one of claims 1 to 10 or a polyester film as obtained by the method according to claim 11;
■ and at least one metal sheet.

## Patentansprüche

1. Polyesterfolie, vorzugsweise aufrollbar, enthaltend auf mindestens einer ihrer Seiten eine unter aktinischer Bestrahlung vernetzte Beschichtung, kratzfest und auf der Grundlage von:
**i.** 20 bis 99 Gew.-% aus mindestens einem (Meth)Acrylsäureester und/oder -amid mit substituierter protischer Gruppierung, bevorzugt aus mindestens einem (Meth)Acrylsäureester und mindestens einem aliphatischen polyhydrischen Alkohol mit substituierter protischer Gruppierung, und besonders bevorzugt aus mindestens einem (Meth)Acrylsäureester und mindestens einem aliphatischen polyhydrischen Alkohol mit substituierter protischer Gruppierung, gewählt innerhalb der Gruppe, die umfasst: 2-Hydroxyethylacrylat und Methacrylat, 3-Hydroxypropylacrylat und Methacrylat, 2-Acryloyloxymethyl-2-hydroxymethylpropan, 2-Methacryloyloxymethyl-2-hydroxymethylpropan, Pentaerythritol-mono-, bis- und triacrylat, Pentaerythritol-mono-, bis- und trimethacrylat, Dipentaerythritol-di-, tri-, tetra- und pentaacrylat und -methacrylat;
**ii.** 20 bis 99 Gew.-% aus Acrylharz(en);
**iii.** 1 bis 40 Gew.-% aus einem Polyalkylendiacrylat, bevorzugt einem Hexamethylendiacrylat;
**iv.** 0 bis 50 Gew.-% aus mindestens einem Derivat der Familie der Benzophenone;
**v.** 0,01 bis 2 Gew.-% aus mindestens einem Photoinitiator, ausgewählt aus den folgenden Produkten: Produkte der Familie der verschiedenen Benzophenone der Derivate (iv) der Familie der Benzophenone allein genommen oder in Mischung untereinander, der Alpha-Hydroxy-Ketone allein genommen oder in Mischung untereinander, Produkte der Familie der Phenylglyoxale allein genommen oder in Mischung untereinander, Produkte gebildet aus einem Gemisch der Verbindungen Bis-Acyl-Phosphin und Alpha-Hydroxy-Keton und ihren Mischungen.

2. Folie nach Anspruch 1, **dadurch gekennzeichnet, dass** sie zwischen 0,01 und 2 Gew.-Photoinitiator enthält, bevorzugt der Größenordnung von 1 Gew.-% im Verhältnis zum Gesamtgewicht der Beschichtung.

3. Folie nach Anspruch 1 oder 2, **gekennzeichnet durch** eine Dicke (e^{f}) zwischen 4 und 350 µm, bevorzugt zwischen 8 und 50 µm.

4. Folie nach einem der Ansprüche 1 bis 3, **dadurch gekennzeichnet, dass** die Beschichtung eine Dicke (e^{r}) von bis zu 10 µm hat, bevorzugt zwischen 1 und 7 µm.

5. Folie nach einem der Ansprüche 1 bis 4, **dadurch gekennzeichnet, dass** die Beschichtung durch Vernetzung unter UV-Bestrahlung erzielt wird.

6. Folie nach einem der Ansprüche 1 bis 5, **dadurch gekennzeichnet, dass** sie durch vorherige Behandlung entweder physikalischer Art der Oberfläche(n) der Folie, die zur Aufnahme der Beschichtung bestimmt ist/sind, oder chemischer Art durch Vorbeschichtung mit Formulierungen auf Acryl-, Polyester- und/oder Polyurethanbasis erhalten wird.

7. Folie nach einem der Ansprüche 1 bis 6, **dadurch gekennzeichnet, dass** sie zumindest auf der Oberfläche Füllstoffe enthält.

8. Folie nach einem der Ansprüche 1 bis 7, **dadurch gekennzeichnet, dass** sie mit mindestens einer zusätzlichen Schicht verbunden ist, vorzugsweise mindestens eine thermoversiegelnde Schicht und/oder eine bedruckbare Schicht und/oder eine Klebeschicht.

9. Folie nach einem der Ansprüche 1 bis 8, **dadurch gekennzeichnet, dass** sie unter anderem mindestens einen anderen Zusatz beinhaltet, vorzugsweise ausgewählt aus der folgenden Gruppe: Farbstoff, antistatischer Wirkstoff, Antioxidans, organisches Schmiermittel, Anti-UV-Zusatz, Katalysator.

10. Folie nach Anspruch 9, **dadurch gekennzeichnet, dass** der Zusatz zumindest ein Anti-UV-Zusatz ist, vorzugsweise vom Typ Triazin.

11. Verfahren zur Herstellung der Folie wie in einem der Ansprüche 1 bis 10 definiert, **dadurch gekennzeichnet, dass** es im Wesentlichen darin besteht:
a. einen Beschichtungsstoff aufzubringen, der die Bestandteile (i) bis (iii) und (v), eventuell (iv) enthält, wie in Anspruch 1 definiert
b. eventuell den Beschichtungsstoff durch Hinzufügen von Lösungsmittel zu verdünnen, um einen Trockenextrakt von höchstens 50 %, bevorzugt von höchstens 35 % und besonders bevorzugt von höchstens 20 % zu erreichen
c. eventuell die Oberfläche(n) der zu beschichtenden Polyesterfolie vorab zu behandeln, bevorzugt durch UV-Bestrahlung oder durch Corona- oder Plasmabehandlung, oder durch Vorbeschichtung mit Formulierungen auf Acryl-, Polyester- und/oder Polyurethanbasis
d. auf die Oberfläche(n) der zu beschichtenden Polyesterfolie den genannten Beschichtungsstoff aufzubringen
e. anschließend auf aktinischem Wege, vorzugsweise durch UV-Licht, den genannten, vorab aufgebrachten Beschichtungsstoff zu trocknen und zu bestrahlen, um eine vernetzte Beschichtung zu erhalten

12. Polyester kolaminiert/Metallfolie (Stahl), **dadurch gekennzeichnet, dass** es umfasst:
■ mindestens eine Polyesterfolie nach mindestens einem der Ansprüche 1 bis 10 oder eine Polyesterfolie, die durch das Verfahren nach Anspruch 11 erhalten wurde
■ und mindestens eine Metallfolie
